# EUROPEAN PATENT APPLICATION

(11) **EP 1 161 874 A2**
(43) Date of publication of application: **12.12.2001**
(21) Application number: 01870111.0
(22) Date of filing: 28.05.2001
(51) Int. Cl.: A21D 13/08, A21D 10/02, A21D 6/00, A21D 8/02, A21C 7/04

(54) **Method for preparing deep frozen dough on the basis of pre-prepared ingredients**

(30) Priority: 24.05.2000 BE 200000352
(71) Applicant: Lanssens, Wouter, 8500 Kortrijk (BE)
(72) Inventor: Lanssens, Wouter, 8500 Kortrijk (BE)
(74) Representative: Leherte, Georges M.L.M., Dr.

(57) **Abstract**

The invention relates to a method for preparing bakery products on the basis of pre-prepared ingredients, whereby the ingredients comprise butter, sugar, liquid, flour and, whether or not, solid constituent parts such as almonds, walnuts, hazelnuts, other types of nuts, honey, cheese, chocolate, fruit chunks, crystallised fruit, herbs, vanilla and/or brésilienne, and suchlike, and are mixed in successive stages, whereby in a first mixing stage butter and in a last mixing stage flour is processed with the formation of dough and that the dough is deep frozen thereafter.
The invention furthermore relates to a pre-produced preparation for making bakery products, whereby the preparation is produced according to a method such as specified above.

## Description

The invention relates on the one hand to a new method for manufacturing bakery products, on the basis of pre-prepared ingredients, and a pre-produced preparation for making bakery products, manufactured according to such a method. The invention relates on the other hand to a device for manufacturing bakery products, on the basis of pre-prepared ingredients.

Various methods already exist whereby private individuals are capable of preparing bakery products themselves on the basis of pre-prepared ingredients. Thus for example pre-forms of deep-freeze dough exist on the market for preparing rolls (such as "crisp rolls" and "soft rolls") and "Viennese bread" (such as butter biscuits or "Danish pastries" and croissants).

For the preparation of butter biscuits ("cookies" or "sweet biscuits") only mixing preparations were available until now, whereby the end-user still had to process the various ingredients into dough. The reason for this is undoubtedly the fact that the processing and manageability of ready-to-use biscuit dough is significantly more difficult than for example bread dough and dough for "Viennese bread", namely with regard to the consistency, stickiness, heat sensitivity, etc.

The purpose of the invention is to provide a method for preparing bakery products, on the basis of pre-prepared ingredients, and to provide a pre-produced preparation for making bakery products, which do not have the above mentionned disavantages.

This purpose is achieved by providing a method for preparing bakery products on the basis of pre-prepared ingredients, whereby the ingredients comprise butter, sugar, liquid, flour and, whether or not, solid constituent parts such as almonds, walnuts, hazelnuts, other types of nuts, honey, cheese, chocolate, fruit chunks, crystallised fruit, herbs, vanilla and/or brésilienne, and suchlike, and are mixed in successive stages, whereby in a first mixing stage butter and in a last mixing stage flour is processed with the formation of dough and that the dough is deep frozen thereafter.

This has the advantage that the flour has not crumbled before the dough is finished, and that the dough is in this manner easier to freeze and to deep-freeze.

On the other hand when producing the dough there is a fast and hygienic processing of the dough, the dough is quickly deep frozen and it is marketed in deep-frozen form.

In a preferred method according to the invention deep-frozen dough is taken with a butter content of at least 20 wt.% and an egg content of at least 10 wt.%.

In a more specific method according to the invention butter is used with
- a minimum milk fat content of 82%;
- a minimum fat content of 83%;
- a maximum of fat-free dry matter of 2%;
- a maximum of Provitamin A of 20 mg/kg.

This butter, through its addition of Provitamin A, has the advantage that after the baking process the biscuit obtains an attractive (golden yellow) colour (that is not obtained with the use of the classic dairy farm butter).

Furthermore a unique flavour of butter is obtained, acquired by the use of this specific type of butter.

In a preferred method according to the invention flour is used with
- a protein content of minimum 11.95%;
- a moisture content of maximum 15.5%;
- an ash content of maximum 0.610%;
- a water absorption of minimum 55%;
- the gluten index ranging from 90 to 98.

Preferably in the method according to the invention no additives such as aromas, flavourings, flavour enhancers, colouring agents, preservatives, thickening agents, and suchlike are added to the dough that is deep frozen.

The advantage is that there is the flavour of the natural ingredients that are used in the method of preparation.

In a preferred method according to the invention deep-frozen pre-forms of unbaked dough are taken as the basis.

In a more specific preferred method according to the invention before or after baking decorations such as almonds, walnuts, hazelnuts, other types of nuts, honey, cheese, chocolate, fruit chunks, crystallised fruit, herbs, vanilla and/or brésilienne, and suchlike are put on the aforementioned deep-frozen pre-forms.

The bakery products on the basis of pre-prepared ingredients are preferably used in the making of butter biscuits. This does however not detract from the fact that these can be used for other purposes.

In a preferred method according to the invention a device is used that is provided for pre-preparing and pre-forming bakery products and for deep freezing the aforementioned bakery products.

In a more specific method according to the invention in the device a filling container is used for pre-forming the dough into the desired form.

In another specific preferred method according to the invention a "filling container" (mixing machine for producing pre-formed dough) is used that comprises a feed hopper for mixing the ingredients into pre-prepared ingredients.

In yet another specific preferred method according to the invention the aforementioned filling container comprises a system that applies vacuum to the dough before the dough is pre-formed into the desired form.

In a more specific preferred method according to the invention a filling container is used that is provided with moulding holes on to which elongated dough moulders can be fitted for pre-forming the pre-prepared ingredients.

In a preferred method of the invention a filling container is used that comprises a control panel for controlling all stages in the production process for manufacturing the pre-prepared ingredients.

In a preferred method according to the invention in the device after the filling container a band conveyor is used that can move both in horizontal direction and in vertical direction.

In a more suitable preferred method according to the invention the speed of the band conveyor is regulated by the aforementioned control panel of the filling container.

The purpose of the invention is further achieved by providing a pre-produced preparation for making bakery products, whereby the dough is produced according to a method such as described above.

The invention will be further specified here on the basis of butter biscuits, which in such a manner does not therefore detract from the fact that other bakery products can also be made according to this method.

The ingredients for making butter biscuits that are part of the recipe are natural products, without genetic modification, which are stored and processed according to the legislation on hygiene in force. No substitute products for natural products that are cheaper in price nor any flavourings, flavour enhancers, aromas, colouring agents or preservatives are added.

In the method for making butter biscuits the sequence in which the ingredients are added to each other is essential. The ingredients that are used are butter, sugar, liquid, flour and possibly solid constituent parts. By liquid is understood eggs, or possibly in certain applications milk. In a first mixing stage butter is processed and in a last mixing stage flour. The ingredients that are mixed in there between can be mixed in random order.

In the method of preparation it is important that minimum 20% butter with addition of Provitamin A and 10% eggs without additives with low germ content are used.

The butter is that with addition of Provitamin A according to EC directive 2571/97. This must also satisfy the following chemical composition:
- the minimum milk fat content is 82%; the minimum fat content 83%;
- the maximum fat-free dry matter is 2%;
- the maximum of Provitamin A is 20 mg/kg.
The processing of this butter must occur at the ideal processing temperature, ranging from 15°C to 20°C, preferably at 18°C. No use at all may therefore be made of margarines, both animal and vegetable, nor of butter aromas or other aromas of whatever form.

The eggs that are used are liquid and contain no additives and have a very low germ content.

As sugar white or light brown icing sugar or brown bastard sugar, powdered sugar, glucose, glucose syrup, invert sugar, sugar granules, pearl sugar, fondant sugar, sugar crystals, sugar candy or bio cane sugar are used.

The flour that is preferably used has:
- a protein content of minimum 11.95%;
- a moisture content of maximum 15.5%;
- an ash content of maximum 0.61%;
- a water absorption of minimum 55%;
- the gluten index ranging from 90 to 98.
The flour must be a mixture of only high-grade quality wheat and consist of wheat, emulsifying agent (E322), gluten, ascorbic acid, enzymes and malt.

Butter, sugar, liquid and flour are the basic ingredients of the butter biscuit. The dough can be deep frozen and marketed as such.

Solid constituent parts can possibly be added before deep freezing. By solid constituent parts is understood: almonds, walnuts, hazelnuts, other types of nuts, honey, cheese, chocolate, fruit chunks, crystallised fruit, herbs, vanilla and/or bresilienne (caramelised sugar mixed with roasted nuts), and suchlike. These are all of the highest quality.
For example:
- the almonds naturally contain a part bitter almonds that accentuate the flavour of the actual almond even more;
- the chocolate has the most pronounced chocolate flavour;
- the cheese is selected from Swiss or French gruyere, new cheese, half-matured cheese or matured cheese;
- the herbs that are used are natural ones;
- the vanilla that is used must be the one that comes directly from the vanilla pod; for this reason no vanilla aromas or vanilla concentrates may be used;
- and suchlike.

The nuts that are used can be in whole form, in ground, flaked or grated state, as well as processed into paste. Furthermore these can also be used in natural or in lightly roasted state or also in caramelised state.

Honey can be used in solid or liquid form or in dehydrated form.

The cheese can be processed in grated state, in blocks, in strips, and suchlike.
The chocolate that is used can be white chocolate, milk chocolate, or bitter chocolate. This can be used in melted state or in solid state. Chocolate "drops" or chocolate "nuggets" can also be used.

The fruit flavours that are added to the biscuits are dehydrated chunks.

The herbs can be used in powder form, liquid form or as these are normally supplied by the producer. They can furthermore also be used in their normal form, such as supplied by the producer, or in concentrated form.

The dough can also be deep frozen and marketed in this way.

Two types of butter biscuits are marketed, namely cottage-style biscuits (small biscuits) and tea biscuits (larger biscuits). With the cottage-style biscuits the dough is pre-formed and manually or mechanically cut into rolls. These are then deep frozen at a temperature of -25°C to - 30°C and packed according to the legislation on hygiene in force. The cottage-style biscuits are cut to the desired thickness and further processed by the end-user. With the tea biscuits the dough is pre-formed and manually or mechanically cut into rolls. These are then cooled to a temperature of -5°C (temperature is controlled via a temperature probe that is stuck into the rolls), and cut at this temperature into the desired thickness for tea biscuits. These are pre-cut because they have to be cut at the ideal temperature due to their size: if the rolls are deep frozen a at too low temperature it is not possible to get through the dough, if the rolls are a at too high temperature deformation occurs when cutting the dough. After cutting the tea biscuits are deep frozen to a temperature ranging from -25°C to -30°C and packed according to the environmental legislation in force. The deep-frozen tea biscuits are further processed in their pre-cut form by the end-user.

The pre-formed dough can be baked in the manner in which the dough is packed or can be further decorated by the end-user before or after baking the pre-formed dough. This decoration can among others consist of a chocolate product, which is resistant to the baking process, a type of sugar that may or may not contain various natural flavours, the application of a layer of liquid whole egg or egg yolk or a mixture of the two on the product. These products give a glaze to the biscuit after the baking process. A little salt can also be added to these glazings. Furthermore some herb can also be used as decoration. Even combinations of various of the aforementioned decorations can be used. These different decorations can be extended in the future should new products be available on the market. These decorations are supplied to the end-user in decoration kits by the producer, together with the aforementioned deep-frozen dough.

Through the availability on the various markets of such a product:
- the end-user, namely industrial and/or artisanal user or private individual can give a personal finish to the biscuit. It is therefore perhaps in the future, an industrial production that will enable a personal artisanal finish;
- the end-user, industrial, artisanal user or private individual can make use of the ready-to-use biscuits, still to be baked, on which a decoration has already been applied. This offers them the advantage that they have a freshly baked, decorative and fine quality product as result.

By means of this method bio-biscuits can also be produced. The raw materials used must then be of biological origin. The method for producing these biscuits must be in accordance with the specifications in force, drawn up by the authorised regulating organisations and the legislation in question. The method of preparation and the manner of production must be appraised by these regulating organisations on the basis of the specifications in force, in order to obtain their approval. After this approval a "bio-guarantee" label must be requested, in order to display this label on the packaging too. The composition of the recipe must also satisfy the predetermined criteria for the normal biscuits, being 20% butter and 10% egg, both of biological origin.

The packaging of the product for the industrial or the artisanal end-user is effected according to the legislation in force for deep-frozen products.

The storage of the packed bakery products occurs in a deep-freeze room of minimum -20°C. It is transported at a maximum temperature of -18°C.

By storing and processing natural ingredients in a hygienic manner the storage life in deep-frozen condition can be up to 1 year on condition that a constant temperature of -18°C is maintained.

The machine for manufacturing bakery products on the basis of pre-prepared ingredients according to the invention is further explained in the following non-restriction specification of a preferred embodiment.

In this specification reference is made by means of reference numbers to the figures attached hereto, whereby
*- figure 1* is a front view of a filling container according to the invention;
- *figure 2* is a view from above of a filling container according to the invention;
- *figure 3* is a side elevation of a filling container according to the invention.

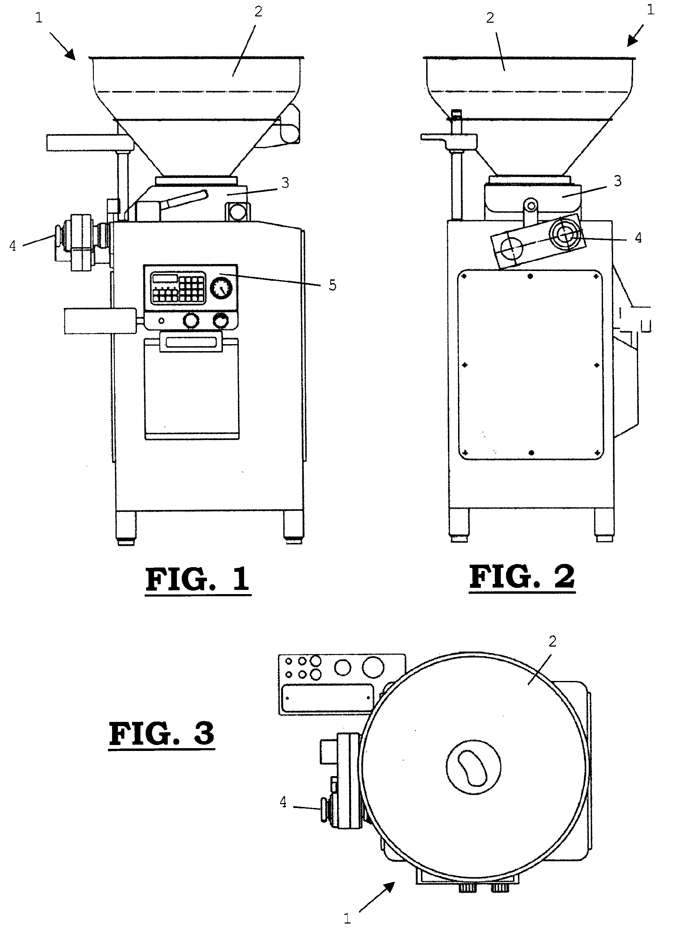

The device (not fully represented in the figure) according to the invention comprises a filling container (1), as represented in figures 1 up to and including 3, which is completely in stainless steel, and which as to safety is fully in accordance with present legislation, e.g. a Konti C50 of the FREY Maschinenbau brand. This filling container (1) is a mixing machine that is provided with a system that pushes the dough uniformly through the moulding opening. Behind the filling container a type of lift (not represented in the figure) with "tip function" and grabs is provided, which lift the tub with the dough upwards and allow it to slide into the feed hopper (2). The quantity of dough is replenished in the feed hopper (2) while the filling container is active.
The filling container (1) is furthermore provided with a vacuum system (3) that prevents air holes in the dough. The dough is guided out of the feed hopper (2) through moulding holes (4), on to which elongated dough moulders (not represented in the figure) e.g. dough cylinders can be placed, to a stainless steel plate that is on a band conveyor (not represented in the figure). These elongated dough moulders can be of all shapes such as a cylinder form, a square form, a round form, a triangular form, a rectangular form, a flat, level form or any other form. The extremity of such an elongated dough moulder corresponds to the top of the band conveyor. The band conveyor can make two movements: horizontal and vertical. The desired weight of dough is adjusted by a control panel (5). When the pre-formed dough has the desired weight the filling container (1) stops, and the pre-formed dough is manually or later mechanically cut off. Thus each portion of pre-formed dough has the same weight. The moving band conveyor ensures that the pre-formed dough that comes out of the elongated dough moulders is arranged next to each other. The band conveyor must therefore move with an optimum speed without the formed dough sliding. The speed of the pusher system in the feed hopper (2) and the speed of the band conveyor are adjusted to each other and are regulated by the control panel of the filling container (1). When the pusher system in the feed hopper (2) comes to a standstill due to one problem or another, the band conveyor also comes to a standstill.

If necessary it is provided that the band conveyor can be sprinkled with flour just before the dough rolls on to it in order to prevent the dough from sticking, this by means of a sprinkler system (not represented in the figure).

The advantage of such a filling container (1) is that:
- The addition of the ingredients occurs quickly one after another;
- The dough is obtained in as short a manner of mixing as possible in a mixing machine with rotating tub;
- The processing of the dough occurs directly after it is made.

## Claims

1. Method for preparing bakery products on the basis of pre-prepared ingredients, **characterised in that** the ingredients comprise butter, sugar, liquid, flour and, whether or not, solid constituent parts such as almonds, walnuts, hazelnuts, other types of nuts, honey, cheese, chocolate, fruit chunks, crystallised fruit, herbs, vanilla and/or brésilienne, and suchlike, and are mixed in successive stages, whereby in a first mixing stage butter and in a last mixing stage flour is processed with the formation of dough and that the dough is deep frozen thereafter.

2. Method according to claim 1, **characterised in that** deep-frozen dough is taken with a butter content of at least 20 wt.% and an egg content of at least 10 wt.%.

3. Method according to claim 2, **characterised in that** butter is used with
- a minimum milk fat content of 82%;
- a minimum fat content of 83%;
- a maximum of fat-free dry matter of 2%;
- a maximum of Provitamin A of 20 mg/kg.

4. Method according to claim 1, **characterised in that** flour is used with
- a protein content of minimum 11.95%;
- a moisture content of maximum 15.5%;
- an ash content of maximum 0.61%;
- a water absorption of minimum 55%;
- the gluten index ranging from 90 to 98.

5. Method according to one of the claims 1 up to and including 4, **characterised in that** no additives such as aromas, flavourings, flavour enhancers, colouring agents, preservatives, thickening agents, and suchlike are added to the dough that is deep frozen.

6. Method according to one of the claims 1 up to and including 5, **characterised in that** deep-frozen pre-forms of unbaked dough are taken as the basis.

7. Method according to one of the claims 1 up to and including 6, **characterised in that** before or after baking decorations such as almonds, walnuts, hazelnuts, other types of nuts, honey, cheese, chocolate, fruit chunks, crystallised fruit, herbs, vanilla and/or brésilienne, and suchlike are put on the aforementioned deep-frozen pre-forms.

8. Method according to one of the claims 1 up to and including 7, **characterised in that** the dough is used for making butter biscuits.

9. Method according to any of the preceding claims, **characterised in that** a device is used that is provided for pre-preparing and pre-forming bakery products and for deep freezing the aforementioned bakery products.

10. Method according to claim 9, **characterised in that** in the device a filling container is used for pre-forming the dough into the desired form.

11. Method according to claim 9, **characterised in that** a filling container (1) is used that comprises a feed hopper (2) for mixing the ingredients into pre-prepared ingredients.

12. Method according to claim 9, **characterised in that** the aforementioned filling container (1) comprises a system (3) that applies vacuum to the dough before the dough is pre-formed into the desired form.

13. Method according to claim 9, **characterised in that** a filling container is used that is provided with moulding holes (4) on to which elongated dough moulders can be fitted for pre-forming the pre-prepared ingredients.

14. Method according to one of the claims 9 up to and including 13, **characterised in that** a filling container (1) is used that comprises a control panel (5) for controlling all stages in the production process for manufacturing the pre-prepared ingredients.

15. Method according to one of the claims 9 and 10, **characterised in that** in the device after the filling container a band conveyor is used that can move both in horizontal direction and in vertical direction.

16. Method according to one of the claims 14 and 15, **characterised in that** the speed of the band conveyor is regulated by the aforementioned control panel (5) of the filling container (1).

17. Pre-produced preparation for making bakery products, **characterised in that** the preparation is produced according to a method according to one of the preceding claims.
